Europäisches Patentamt

**European Patent Office**

**Office européen des brevets**

(11) Publication number: **0 425 983 A1**

# EUROPEAN PATENT APPLICATION

(21) Application number: 90120314.1

(51) Int. Cl.⁵: **F01N 3/28**, F01N 3/02

(22) Date of filing: 23.10.90

(30) Priority: 23.10.89 US 425707

(43) Date of publication of application:
**08.05.91 Bulletin 91/19**

(84) Designated Contracting States:
**BE DE ES FR GB IT NL SE**

(71) Applicant: **ARVIN INDUSTRIES, INC.**
**1531 E. Thirteenth Street**
**Columbus Indiana 47201(US)**

(72) Inventor: **Thayzer, Timothy Z.**
**1120 East Jackson Street**

Hope, Indiana 47246(US)
Inventor: **Ford, Jamea P.**
**17 650 East, 400 South**
**Elizabethtown, Indiana 47232(US)**
Inventor: **Scheitlin, George E.**
**3843 West North Wood Lake Drive**
**Columbus, Indiana 47201(US)**

(74) Representative: **Leiser, Gottfried, Dipl.-Ing. et al**
**Patentanwälte Prinz, Leiser, Bunke & Partner**
**Manzingerweg 7**
**W-8000 München 60(DE)**

(54) Exhaust processor with sized ends.

(57) A method is provided for producing an exhaust processor assembly (10) of an exhaust system to treat a combustion product. The method includes providing a unitary elongated container (12) having first and second end sections (36,38) which are reduced in size to accommodate connection to the exhaust system. A substrate (26) is first loaded within the unitary elongated container (12) prior to the reducing step to filter the combustion product conducted therethrough. The end sections (36,38) are reduced in size by converging them toward a longitudinal axis (46) defined by the elongated container (12). The reducing step is performed by inserting the end section (36,38) into a die (52) with the longitudinal axis (46) of the unitary elongated container (12) perpendicular to a die face (56) defined by the die (52).

FIG. 3

## EXHAUST PROCESSOR WITH SIZED ENDS

### Background and Summary of the Invention

This invention relates to exhaust processor assemblies and methods for producing exhaust processor assemblies used to treat combustion product. More particularly, the present invention relates to a unitary exhaust processor assembly and a method for producing an exhaust processor assembly by providing a unitary elongated container having first and second end sections and reducing the size of at least one of the end sections to accommodate connection to the exhaust system.

Conventional exhaust processors include a housing that communicates with an exhaust manifold of an engine. Within this housing is a substrate that filters combustion product from the engine. The exhaust or filtered product is then expelled from the exhaust processor assembly into a muffler and tail pipe assembly. The exhaust then exits the exhaust system into the atmosphere.

It is well known in the art to produce exhaust processor assemblies by two methods. The first method is practiced to provide a clamshell exhaust processor assembly and the second method is practiced to provide a stuffed-can exhaust processor assembly.

The clamshell assembly usually includes a first clamshell portion and a complementary second clamshell portion sized to surround a substrate. Two seams, usually one on each side of the assembly, are welded using appropriate means to provide a clamshell housing for the substrate.

The stuffed-can assembly includes a can in which a substrate is stuffed. Cones or transitions, necessary for attachment of the processor to the exhaust system, are welded to the ends of the can.

Both these methods require the assembly of several parts in order to provide a housing for the substrate. In addition, the methods require an extensive amount of welding. As a result, it is possible that a final exhaust processor assembly having incorrect dimensions may be produced due to the warpage from the welding operations used to assemble the housing from its component parts.

One object of the present invention is to eliminate the welding operations necessary for production of exhaust processor assemblies by providing a unitary container configured to house the substrate and accommodate attachment of the exhaust processor to the exhaust system.

Another object of the present invention is to reduce the number of parts necessary for production of an exhaust processor assembly by providing a unitary container for both housing the substrate and accommodating the attachment of the exhaust processor to the exhaust system.

Yet another object of the invention is to provide a method of sizing down or necking down an exhaust processor housing after a substrate is deposited therein to provide a nipple at the inlet and outlet of the housing that is sized to connect to the exhaust portion without having to weld any separate cones or transition sections to the housing to provide such a nipple connection.

Still another object of the invention is to provide a method of producing an economical exhaust processor assembly having improved durability and quality. This object is achieved in part by providing a unitary exhaust processor housing with sized ends configured to connect directly to an exhaust system without welding extra parts or cones to the housing to provide a transition section interconnecting the exhaust processor housing and the exhaust system.

According to the present invention, an improved method is provided of producing an exhaust processor assembly. The method includes providing a unitary elongated container having first and second end sections. At least one of the end sections is reduced in size to accommodate connection of that end to the exhaust system. Each end section is configured to define an opening. At least one substrate is loaded into the unitary elongated container to filter combustion product conducted therethrough.

The unitary elongated container includes a body section located between the first and second end sections. The substrate is positioned within the body section of the unitary elongated container. At least one of the open ends is reduced in size by converging the opening defined by the end section toward a longitudinal axis as defined by the unitary elongated container. The converging of the end section toward the longitudinal axis is accomplished by inserting the end section into a die.

Also, according to the present invention an exhaust processor assembly is provided for treating combustion product. The exhaust processor assembly includes a substrate for treating the combustion product and a unitary housing having a body section for receiving the substrate therein. The unitary housing terminates at first and second end sections extending outward in opposite directions from the body section along a longitudinal axis defined by the unitary housing. At least one of the end sections is necked down or otherwise configured to enable attachment of the processor to the exhaust system.

In this specification and in the claims, the words "exhaust processor" are intended to refer to various types of catalytic converters and processors, diesel particulate filters, and other particulate traps in connection with which the invention may be used.

Additional objects, features, and advantages of the invention will become apparent to those skilled in the art upon consideration of the following detailed description of preferred embodiments exemplifying the best mode of carrying out the invention as presently perceived.

Brief Description of the Drawings

The detailed description particularly refers to the accompanying figures in which:

Fig. 1 is a sectional view of an undeformed exhaust processor sleeve loaded with a pair of substrates;

Fig. 2 is a view of the exhaust processor assembly of Fig. 1 showing the use of die means to neck down or size the ends of the sleeve;

Fig. 3 is a view of the final configuration of the exhaust processor assembly of Figs. 1 and 2 in use;

Fig. 4 is an exploded view of the components used in the construction of another embodiment of the present invention before they are loaded into an undeformed exhaust processor sleeve;

Fig. 5 is a view of the components shown in Fig. 4 following assembly in the exhaust processor sleeve;

Fig. 6 is a view of the exhaust processor assembly of Fig. 4 showing the use of die means to neck down or size the ends of the fully loaded sleeve; and

Fig. 7 is a view of the final configuration of the exhaust processor assembly of Figs. 4-6 in use.

Detailed Description of the Drawings

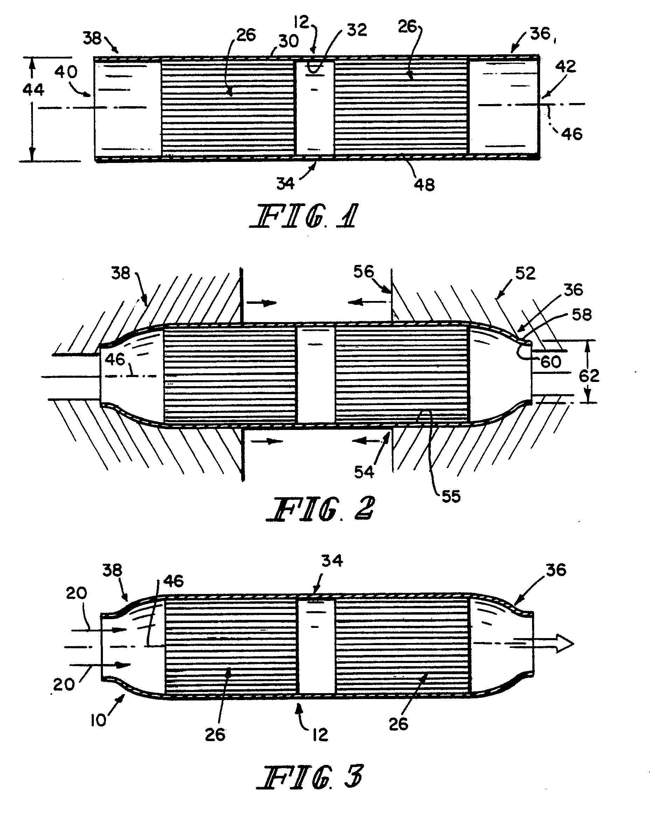

An exhaust processor assembly 10 manufactured in accordance with the method of the present invention is shown in Fig. 3. The method used to produce this exhaust processor assembly 10 is shown in Fig. 1 and Fig. 2. The exhaust processor assembly 10 includes a unitary elongated container or sleeve 12 having a body section 34. End sections 36, 38 extend axially outward from body section 34 along longitudinal axis 46. The end sections 36, 38 are provided with end openings 40 and 42 to accommodate attachment of the exhaust processor to the exhaust system. A pair of substrate means 26 is disposed in an interior region of combustion product 20 conducted through housing 12 in the conventional way.

The method for producing the exhaust processor assembly 10 begins by providing a unitary elongated container 12 as shown in Fig. 1. The unitary elongated container is rolled, welded and formed in a conventional manner to provide an open-ended sleeve for receiving the substrate means 26 therein. The unitary elongated container 12 can be constructed to have a variety of cross-sectional shapes (e.g., oval, circular, etc.). The elongated container's outer surface 30 can also be formed to include rolled ribs, dimples, or the like. The elongated container 12 of Fig. 1 is in the shape of a right circular cylinder having an inner diameter 44.

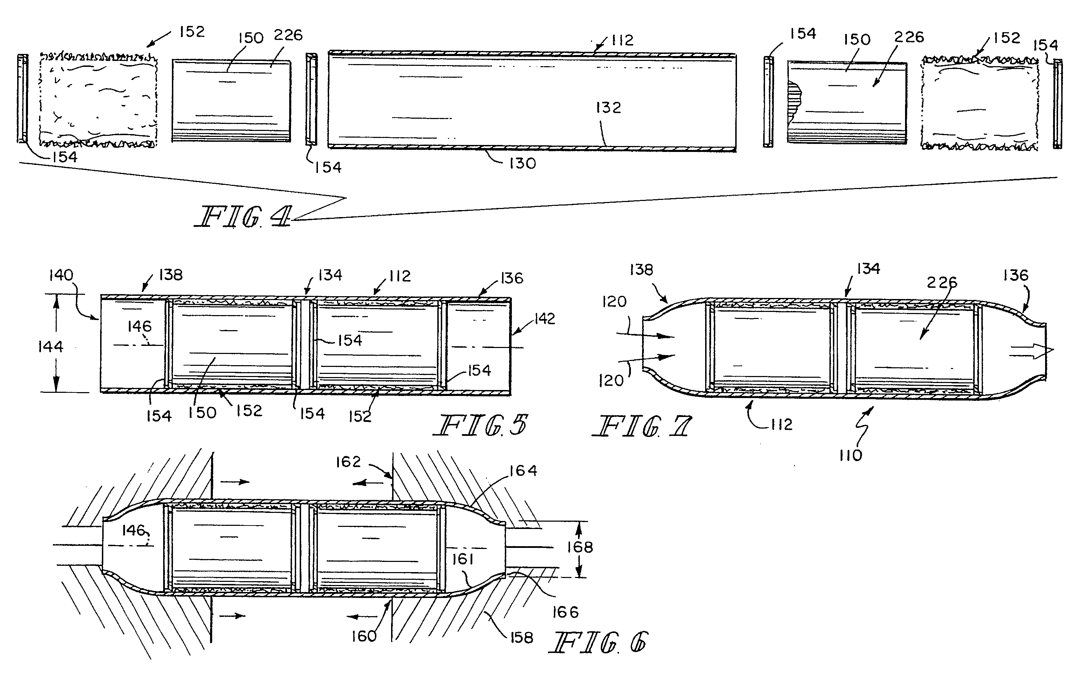

The substrate means 26 is positioned within the body section 34 of unitary elongated container 12. Although use of a metal substrate is preferred as shown in Figs. 1-3, use of a ceramic substrate as shown in Figs. 4-7 or a substrate made of another suitable material is contemplated.

Referring to Fig. 1, each substrate 26 is disposed in the interior region of body section 34 to lie in spaced-apart relation to the open ends 40, 42. Each substrate 26 can be fixed in a predetermined position within sleeve 12 by brazing or other known attachment techniques.

The next step, as shown in Fig. 2, is to reduce or neck down the end sections 36 and 38 of unitary elongated container 12 to accommodate attachment of the exhaust processor assembly 10 to the exhaust system. The method of reducing the size of the end sections 36 and 38 will be described by referring to end section 36 only. A die 52 having a die face 56, an opening 54, and a shaping surface 55 is used to neck down each of end sections 36, 38. The shaping surface 55 is contoured to have a shape matching the final desired shape of end sections 36, 38. End section 36 of unitary elongated container 12 is inserted into die 52 through opening 54. Once inserted, the longitudinal axis 46 of unitary elongated container 12 is aligned to lie perpendicular to the die face 56 of die 52. The shaping surface 55 is such that the end section 36 of unitary elongated container 12 converges uniformly inward toward longitudinal axis 46 as the end section 36 is further inserted within die 52. The necking down of end section 36 is terminated when circular aperture 60 reaches a predetermined diameter 62 required for attachment of the exhaust processor assembly 10 to the exhaust system.

Referring to Fig. 2, the insertion of end section 36 into die 52 reshapes the end section 36 so that it has an annular necked-down wall 58 terminating in a circular aperture 60. Of course, circular aperture 60 has an inner diameter that is less than the inner diameter of its parent outlet opening 42. The inner diameter of circular aperture 60 is selected to permit the necked-down end section 36 to mate easily with a pipe (not shown) included in the rest of the exhaust system.

If aluminized steel is utilized for the unitary elongated container 12, the end sections 36 and 38 can be necked down by insertion into a single die. However, if 409 stainless steel or the like is utilized as the material of the unitary elongated container 12, a multi-stage die process is required because of work-hardening of the material. In such a case, a series of progressive dies is used to produce the neck-down shape of end sections 36, 38.

The order in which the step of loading the substrate means 26 within the unitary elongated container 12 and the step of reducing the size of the end sections 36 and 38 are performed may vary within the scope of the present invention. If both end sections 36 and 38 are to be reduced in size simultaneously, the substrate means 26 must first be loaded within unitary elongated container 12 prior to the reducing step. However, it is also possible to reduce in size end section 36, then load the substrate means 26 into the unitary elongated container through opening 40, and then subsequently reducing the size of end section 38 to form exhaust processor assembly 10.

In an alternative embodiment, it is possible to reduce in size only one of the end sections and subsequently weld a cone to the remaining end section to accommodate attachment to the exhaust system. Welding of a cone to accommodate attachment of an exhaust processor to the exhaust system is well known in the prior art. When a cone is utilized, the substrate means is generally positioned much closer to the opening at the end section as compared to the position of the substrate means when the end section is reduced in size by insertion into a die.

A second embodiment of the invention is illustrated in Figs. 4-7. These figures illustrate a method of producing an exhaust processor assembly 110 which uses ceramic substrate means 226 to filter combustion product 120. Metallic substrate means could also be utilized in this embodiment to filter the combustion product, however the embodiment will be described with reference to ceramic substrate means.

An exhaust processor assembly 110, shown in Fig. 7, is manufactured in accordance with the method shown by Figs. 4-6. The exhaust processor assembly 110 includes a unitary elongated container 112 having a body section 134 and end sections 136, 138. The end sections 136, 138 are configured to accommodate attachment of the exhaust processor assembly to the exhaust system. Ceramic substrate means 226 within unitary elongated container 112 is used to treat the combustion product 120 introduced into the assembly 110.

A pre-assembly step of the method of producing exhaust processor assembly 110 is shown in Fig. 4. A unitary elongated container 112 is rolled, welded, and formed in a conventional manner in a shape that is appropriate to house ceramic substrate means 226. The shape of this unitary elongated container 112 can vary. The shape may be round, oval, etc. The preferred shape and the one which will be described in detail by reference to the drawings, Figs. 4-7, is an elongated container formed in the shape of a right circular cylinder.

The unitary elongated container 112 has an inner surface 132 and an outer surface 130. The unitary elongated container 112 further includes a body section 134 for receiving and mounting the ceramic substrate means 226. Extending outward from the body section 134 along longitudinal axis 146 as defined by the unitary elongated container 112 are end sections 136 and 138. The end sections 136 and 138 define openings 140 and 142.

Ceramic substrate means 226 is loaded within the body section 134 of unitary elongated container 112. The number of ceramic substrate elements comprising the substrate means 226 may vary and is not limited to one or two. Prior to the ceramic substrate means 226 being loaded into the unitary elongated container 112, each ceramic substrate means 226 is wrapped with a support means 152. The support means 152 can be wire mesh, intumescent mat, blanket material, or any other suitable means. The substrate means 226 wrapped with the support means 152 is inserted through one of the openings 140, 142 and moved to a position within the interior region of the body section 134.

Once the wrapped substrate means is positioned within the unitary elongated container 112 a predetermined distance from opening 140 or 142, a pair of retaining members 154 are connected to container 112 to retain the wrapped ceramic substrate means at its desired position in the body section 134 of unitary elongated container 112. In this particular embodiment with the unitary elongated container being a right circular cylinder, the retaining means 154 are rings. Of course, the retaining members 154 have a shape and size selected to connect to the open ends of the container 112. The rings 154 are spot welded to the unitary elongated container 112 in order to retain the wrapped ceramic substrate means 226, 152 in position.

A variety of techniques can be used to load a ceramic substrate 226 carrying mat mount material 152 wrapped around the exterior surface 150 of the ceramic substrate 226 into its final position inside the container 112. First, the subassembly comprising the ceramic substrate 226 and its mat mount material cloak 226 can be simply pushed into an open end of the container 112 and moved to its final resting place. In the process, the mat mount material 152 would most likely be compressed radially. Alternatively, the subassembly 152, 226 could be slid into a container sleeve (not shown) that has an inner diameter larger than the outer diameter of the subassembly 152, 226. The entire container sleeve could be radially compressed and sized down to reduce its inner diameter enough to cause the subassembly 152, 226 to fit snugly within the container sleeve. The subassembly 152, 226 could be held in a predetermined position within the container sleeve by such a snug fit.

In either case, end sections 136, 138 are then reduced in size to accommodate attachment of unitary container 112 to the exhaust system. This necking down is shown in Fig. 6 and comprises the same method as used in necking down the end sections 36, 38 of the first embodiment shown in Fig. 2.

A die 158 is configured to have a die face 162, an opening 160, and a shaping surface 161 of the shape appropriate to reduce the end section 136 to configure it for attachment to the exhaust system. End section 136 is inserted into opening 160 of die 158, such that the longitudinal axis 146 of unitary elongated container 112 is perpendicular to the die face 162 of die 158. The shaping surface 161 is such that end section 136 converges uniformly inward toward longitudinal axis 146 as the end section 136 is inserted further into the die 158. The necking down of end section 136 is terminated when circular aperture 166 reaches a predetermined diameter 168 required for attachment of the exhaust processor assembly 110 to the exhaust system. The insertion of end section 136 into die 158, Fig. 6, configures the end section 136, to form a frustum parabaloid 164 terminating in circular aperture 166.

As was described with regard to the first embodiment, configuring end sections 136 and 138 may require insertion of the end sections into more than one die depending on the material utilized for the unitary elongated container. In addition, the order in which the step of loading substrate means 126 within the unitary elongated container 112 and the step of reducing the size of the end sections 136 and 138 are performed may vary. The loading step may occur prior to the simultaneous reduction of both end sections. The loading step may occur subsequent to reduction of one end section. Other sequences are possible. It is possible to neck down only one end section as a cone or transition section may be welded to one of the end sections to accommodate attachment of the exhaust processor to the exhaust system.

Both embodiments of the invention utilize a unitary elongated container and the necking down of the end sections of that container. This eliminates the need for assembly or welding of several pieces in order to contain the substrate means for filtering the combustion product. This elimination of welding operations and the reduction in the number of necessary parts, reduces the amount of deformation of the exhaust processor assembly that may be caused by warpage from welding operations, reduces the cost of producing the exhaust processor assembly and improves the quality of the exhaust processor assembly.

Although the invention has been described in detail with reference to certain preferred embodiments, variations and modifications exist within the scope and spirit of the invention as described and defined in the following claims.

## Claims

1. A method for producing an exhaust processor of an exhaust system to treat a combustion product, the method comprising the steps of
providing a unitary elongated container having first and second end sections, the end sections defining openings, and
reducing the size of the opening of at least one end section to accommodate connection of the at least one end section to the exhaust system.

2. The method of claim 1, further comprising the step of loading into the unitary elongated container at least one substrate means for filtering the combustion product.

3. The method of claim 2, wherein the unitary elongated container of the providing step further includes a body section located adjacent to and between the first and second end sections along a longitudinal axis of the unitary elongated container.

4. The method of claim 3, wherein the loading step further comprises the step of positioning the substrate means within the body section of the unitary elongated container.

5. The method of claim 4, wherein the reducing step further comprises the step of deforming the at least one end section in a radially inwardly extending direction toward the longitudinal axis to form a converging section.

6. The method of claim 3, wherein the reducing step further comprises the steps of
inserting the at least one end section into a die, the longitudinal axis of the unitary elongated container being oriented to lie in perpendicular relation to a die face defined by the die, and
subsequently removing the at least one end section from the die.

7. The method of claim 3, wherein the providing step further comprises the step of forming the unitary elongated container in the shape of a hollow right circular cylinder.

8. The method of claim 7, wherein the reducing step further comprises the step of converging the at least one end section radially inward towards the longitudinal axis terminating in a circular aperture.

9. The method of claim 7, wherein the reducing step further comprises the step of shaping the at least one end section in the form of a hollow frustum paraboloid extending from the body section and along the longitudinal axis terminating in a circular aperture.

10. A method for producing an exhaust processor of an exhaust system for treating a combustion product, the method comprising the steps of

providing a unitary elongated container having first and second end sections, the end sections defining openings, and

encapsulating at least one substrate means within the unitary elongated container.

11. The method of claim 10, wherein the encapsulating step further comprises the steps of

loading the at least one substrate means within the unitary elongated container, the unitary elongated container defining a longitudinal axis, and

reducing the size of the first and second end sections to accommodate attachment of the openings to the exhaust system.

12. The method of claim 11, wherein the reducing step further comprises the step of converging the end sections inward toward the longitudinal axis.

13. The method of claim 10, wherein the providing step further comprises the step of forming the unitary elongated container to define a hollow right circular cylinder.

14. The method of claim 13, wherein the encapsulating step further comprises the steps of

loading the at least one substrate within the hollow right circular cylinder, the right circular cylinder having a longitudinal axis, and

converging the end sections radially inward towards the longitudinal axis terminating in circular apertures.

15. A method for producing an exhaust processor of an exhaust system for treating a combustion product, the method comprising the steps of

providing a unitary elongated container having openings at the container's opposite ends, and

reducing the size of a portion of the unitary elongated container adjacent to at least one of the openings to accommodate attachment of the processor to the exhaust system.

16. The method of claim 15, further comprising the step of positioning at least one substrate means within the unitary elongated container a predetermined distance from the at least one of the openings to filter the combustion products the unitary elongated container defining a longitudinal axis.

17. The method of claim 16, wherein the reducing step further comprises the step of converging the portion of the unitary container adjacent to the at least one of the openings inward toward the longitudinal axis.

18. The method of claim 16, wherein the providing step further comprises the step of forming the unitary elongated container to define a hollow right circular cylinder along the longitudinal axis, the right circular cylinder having a body section for receiving the at least one substrate means located adjacent to and between the container's opposite ends along the longitudinal axis.

19. The method of claim 18, wherein the reducing step further comprises the step of converging the portion of the unitary elongated container adjacent to at least one of the openings radially inward toward the longitudinal axis.

20. The method of claim 19, wherein the reducing step further comprises the step of shaping the portion of the unitary elongated container adjacent to at least one of the openings in the form of a hollow frustum paraboloid extending from the body section and along the longitudinal axis of the hollow right circular cylinder, terminating in a circular aperture.

21. An exhaust processor assembly of an exhaust system for treating a combustion product, comprising

substrate means for treating the combustion product, and

a unitary housing having a body section for receiving the substrate means, the unitary housing terminating in first and second end sections extending outward in opposite directions from the body section along a longitudinal axis defined by the unitary housing, the end sections defining openings, at least one opening configured for attachment of the processor to the exhaust system.

22. The exhaust processor assembly of claim 21, wherein the end section defining the at least one opening is configured to define a nipple section.

23. The exhaust processor of claim 22, wherein the nipple section comprises a hollow frustum paraboloid extending from the body section along the longitudinal axis, terminating in a circular aperture.

FIG. 1

FIG. 2

FIG. 3

FIG. 4

FIG. 5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 207 615 (TENNECO INC) <br> * page 2, last paragraph - page 4, paragraph 1; figure 1 * <br> — — — | 1-23 | F 01 N <br> 3/28 <br> F 01 N 3/02 |
| X,A | EP-A-0 243 951 (KEMIRA OY) <br> * the whole document * <br><br> — — — | 1-8, 10-19,21, 22,9,20, 23 | |
| A | US-A-4 087 039 (BALLUFF) <br> * the whole document * <br> — — — | 1-8, 10-19,21 | |
| A | DE-A-2 343 973 (UNIVERSAL OIL PRODUCTS) <br> — — — — — | | |

| | |
|---|---|
| | TECHNICAL FIELDS SEARCHED (Int. Cl.5) |
| | F 01 N |

The present search report has been drawn up for all claims

| Place of search | Date of completion of search | Examiner |
|---|---|---|
| The Hague | 07 January 91 | FRIDEN C.M. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document